# EUROPEAN PATENT APPLICATION

(11) **EP 1 460 282 A1**
(43) Date of publication of application: **22.09.2004**
(21) Application number: 04005953.7
(22) Date of filing: 12.03.2004
(51) Int. Cl.: F16B 37/04

(54) **A fastening device for anchorage to a receiving seat**

(30) Priority: 17.03.2003 IT TO20030048 U
(71) Applicant: SPECIALINSERT S.r.l., I-10142 Torino (IT)
(72) Inventor: Arduini, Piero, 10136 Torino (IT)
(74) Representative: Serra, Francesco

(57) **Abstract**

A fastening device for anchorage to a receiving seat is described. The device comprises a body (3) with a threaded or non-threaded, blind or through hole (6), or with a threaded or non-threaded pin, with projecting side walls (4) and a piano-wire cage (8) extending around the body (3) in a resilient manner.

## Description

The present invention relates to a fastening device for anchorage to a receiving seat.

The object of the present invention is to provide a fastening device for anchorage to a substantially rectangular receiving seat, which device is of simple construction and easy to put in place without the use of tools for its installation.

The present invention achieves the above-mentioned objects by means of a fastening device for anchorage to a receiving seat having the characteristics referred to specifically in the appended claims.

Further characteristics and advantages of the present invention will become clear in the course of the following detailed description which is provided purely by way of nonlimiting example with reference to the appended drawings, in which:

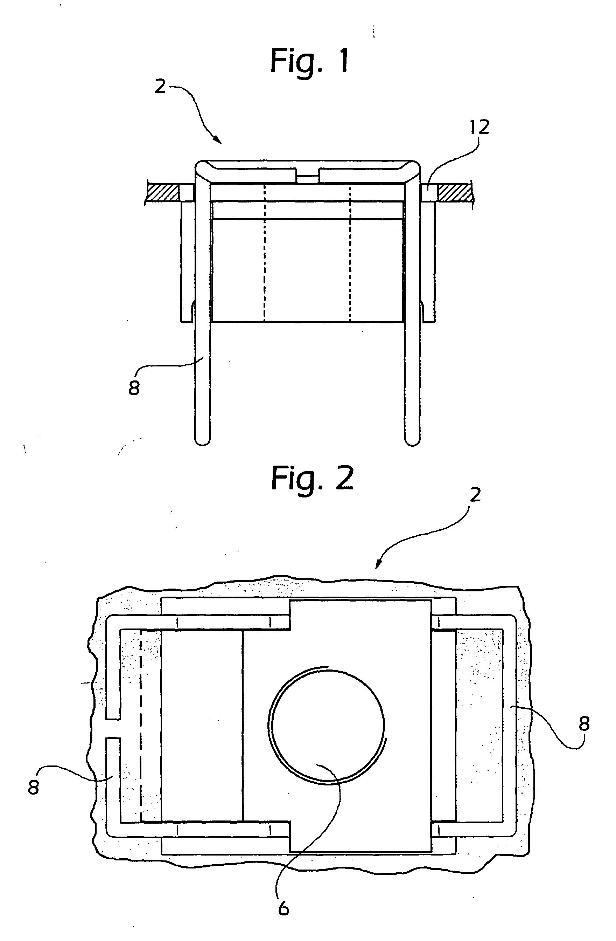

Figure 1 is a view of the device of the present invention,
Figure 2 is a plan view of Figure 1,
Figure 3 is a perspective view of the device of the present invention, fitted in the receiving seat,
Figures 4-7 show the device of the present invention in the stages of its fitting in the receiving seat, and
Figure 8 is a perspective view of a variant of the device of the present invention.

With reference to the drawings, the device of the present invention, in the installed condition, is generally indicated 2.

The device 2 comprises a body 3 with projecting side walls 4 and a threaded hole 6. The body 3 is surrounded by a cage 8 made of piano wire.

The cage 8 is fitted in seats 5 suitable for restraining the cage 8. The cage 8 is resilient and the device 2 is fitted as follows.

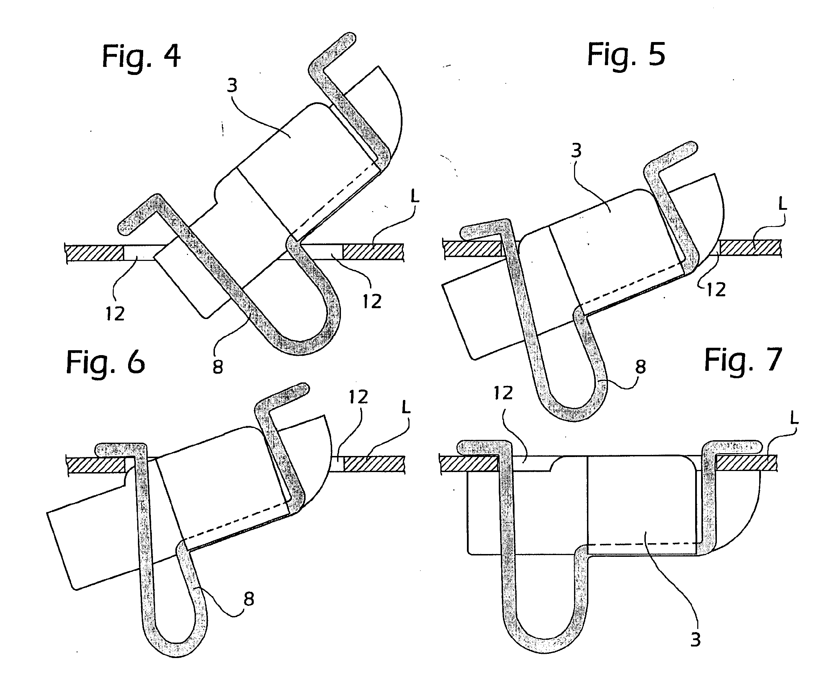

With reference to Figures 4-7 and upon the assumption that the device 2 is to be fitted in a seat 12, for example, a rectangular seat formed in a rolled section L, the device 2 is inclined in order to insert the shorter side of the device in the seat 12.

The side with the more projecting wall is outside the seat 12 at this point; the device is acted on so that the cage (resilient wire) is compressed and a slight pressure is exerted towards the seat; the projecting side of the device 2 facilitates the complete insertion of the device into the rolled section L, preventing interference with the receiving component and being anchored therein.

The advantages of a device according to the present invention are clear from the foregoing description; tools are not required for its installation and manual insertion is facilitated by the resilience of the piano-wire cage and therefore requires minimal effort.

In use, the large reaction surface on the rear side of the receiving rolled section ensures resistance to pulling and, moreover, the use of the piano wire, which fits tightly and resiliently in the receiving seat, confers on the device of the present invention anti-vibration characteristics and security against accidental slipping out of the rolled section prior to assembly.

The device of the present invention can be fitted in blind elements where access to the interior is not possible, for example, metal box sections.

The device can be mounted on any material, for example, light alloy, steel, plastics material, etc., with minimal thicknesses, thus solving the problems of forming threads in small thicknesses and, moreover, the device can be fitted in and removed from its seat several times without alteration of its characteristics.

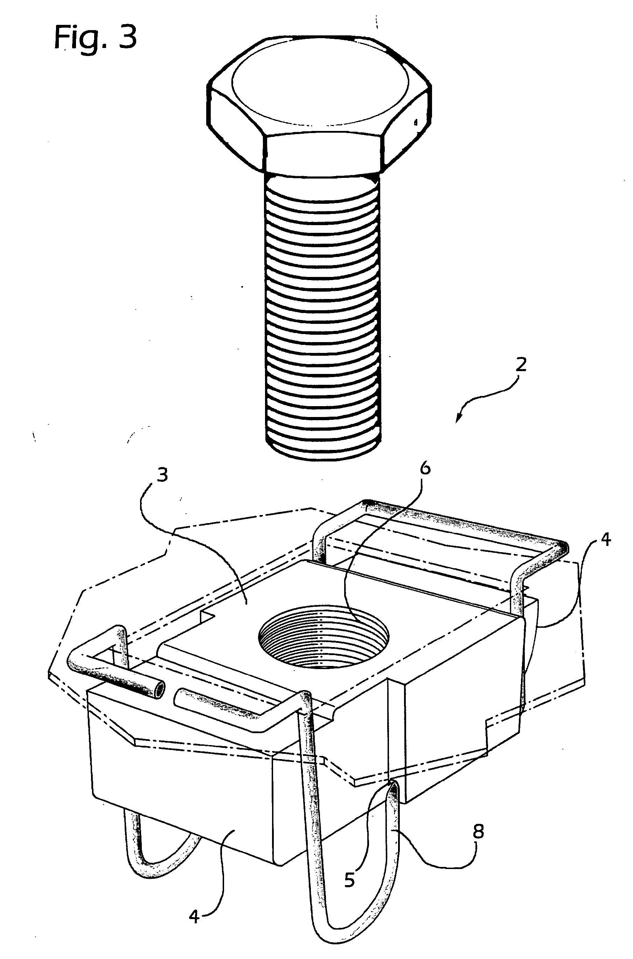

In the embodiment shown in Figure 3, the body 3 with the threaded hole 6 is engaged by a screw D.

In an embodiment which is not shown, the body 3 may be replaced by a threaded or non-threaded pin on a rectangular base; in another embodiment, likewise not shown, the threaded hole 6 may be replaced by a blind or through seat suitable for receiving a fastening device, for example, a force-fitted or snap-engaged device.

Naturally, the principle of the invention remaining the same, wide variations may be applied to the embodiments described and illustrated without thereby departing from the scope of protection of the invention.

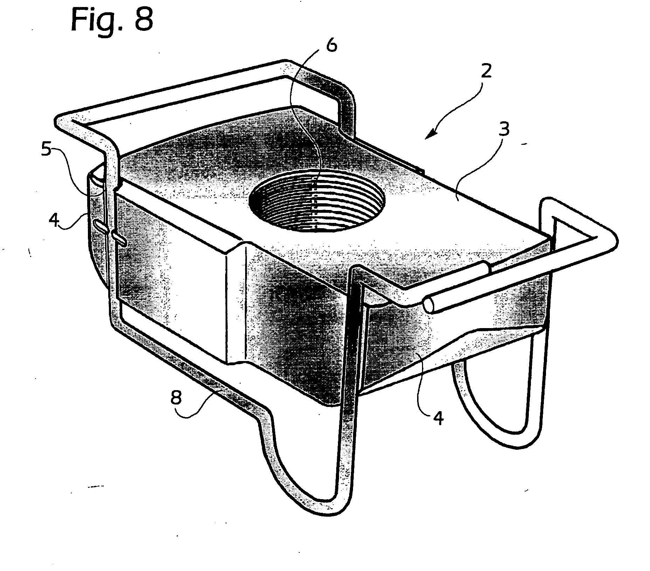

For example (Figure 8), the seats 5 may be formed laterally in the body 3 and, by interference, restrain the cage 8 with friction, allowing the cage to slide on the body 3 so that the present invention can be applied to small and variable thicknesses.

If the receiving seat is recessed, the device of the present invention can be arranged flush therewith.

## Claims

1. A fastening device for anchorage to a receiving seat, **characterized in that** it comprises a body (3) with projecting side walls (4) and a piano-wire cage (8) extending around the body (3) in a resilient manner.

2. A fastening device according to Claim 1, **characterized in that** the body (3) comprises a threaded hole (6).

3. A fastening device according to Claim 1, **characterized in that** the body (3) comprises a threaded or non-threaded pin.

4. A fastening device according to Claim 1, **characterized in that** the body (3) comprises a blind or through seat.
The whole as described and illustrated and for the purposes specified.
